# EUROPÄISCHE PATENTSCHRIFT

(11) **EP 3 207 605 B1**
(45) Veröffentlichungstag und Bekanntmachung des Hinweises auf die Patenterteilung: **10.03.2021**
(21) Anmeldenummer: 15843097.5
(22) Anmeldetag: 19.11.2015
(51) Int. Cl.: H02B 1/28, H02B 13/025, H02G 3/08, H02K 5/22

(54) **KLEMMENKASTEN MIT ERHÖHTER KURZSCHLUSSFESTIGKEIT FÜR ELEKTRISCHE MASCHINEN**
TERMINAL BOX HAVING AN INCREASED SHORT-CIRCUIT CURRENT RATING, FOR ELECTRICAL MACHINES
BOÎTE À BORNES À VALEUR DE COURANT DE COURT-CIRCUIT ADMISSIBLE ÉLEVÉE POUR MACHINES ÉLECTRIQUES

(30) Priorität: 14.10.2014 DE 102014114911
(43) Veröffentlichungstag der Anmeldung: 23.08.2017
(73) Patentinhaber: VEM Sachsenwerk GmbH, 01257 Dresden (DE)
(72) Erfinder: STÜBNER, Thomas, 01156 Dresden (DE); UHLIG, Michael, 01744 Dippoldiswalde (DE)
(74) Vertreter: Drechsler, Gottfried
(86) Internationale Anmeldenummer: PCT/IB2015/002525
(87) Internationale Veröffentlichungsnummer: WO 2016/059477

(56) Entgegenhaltungen:
- DE-A1- 2 441 523
- DE-A1- 2 448 378
- DE-A1- 2 817 418
- DE-A1- 4 312 621
- DE-B3-102007 011 386
- DE-U- 7 325 849
- DE-U1-202013 101 980
- JP-U- S55 134 761

## Beschreibung

Die Erfindung betrifft eine Hochspannungsmaschine mit einem daran oder darin angeordneten Klemmenkasten nach dem Oberbegriff des Anspruches 1, insbesondere für Hochspannungsmaschinen größer 1kV.

Auf Grund immer höherer Kurzschlussleistungen elektrischer Netze kommt es infolge von Kurzschlüssen in Klemmenkästen elektrischer Hochspannungsmaschinen zu Lichtbögen. Diese können zu einer Explosion und damit zur Gefahr für umstehende Menschen führen, wenn es dabei zu einer unkontrollierten Zerstörung des Klemmenkastens kommt. Auch andere technische Anlagen oder Ausrüstungen, welche in der Nähe angeordnet sind, können dadurch erhebliche Schäden erleiden. Da die Möglichkeit eines Kurzschlusses im Klemmenkasten nicht absolut ausgeschlossen werden kann, muss der Schutz gegen die Folgen einer unkontrollierten explosionsartigen Zerstörung nach außen oder die Auswirkungen einer Explosion im Inneren des Klemmenkastens durch eine geeignete Konstruktion des Klemmenkastens erfolgen. Die bekannten technischen Lösungen weisen jedoch erhebliche unterschiedliche Mängel auf oder sind in ihrer Wirkung nicht ausreichend.

Aus dem Stand der Technik sind eine Vielzahl von verschiedenen technischen Lösungen bekannt, in denen die Klemmenkästen mit einer Reihe von Sollbruchstellen konstruktiv ausgebildet sind. In der Regel sind entsprechende dünne Materialnähte eingearbeitet, welche bei einem Kurzschluss im Inneren des Klemmenkastens aufplatzen und die Explosionsenergie nach einer Seite, nach oben oder nach unten weg führen. Bei einer Reihe von Lösungen besteht allerdings die Gefahr, dass die ab- oder weggesprengten Teile des Klemmenkastens sich mit erheblicher Geschwindigkeit vom Klemmenkasten weg bewegen und so erhebliche Schäden verursachen können. Aus der DE 24 48 378 AS ist ein Hochspannungsklemmenkasten für elektrische Maschinen bekannt, wo mindestens eine Wandung des Klemmenkastens aus einem dünneren Material als das übrige Klemmenkastengehäuse besteht. Diese dünnere Wandung kann beispielsweise aus Stahl mit geringerer Festigkeit als das übrige Klemmenkastengehäuse, oder auch aus einer Metallfolie bestehen. Diese Metallfolie kann gegebenenfalls auch noch an bestimmten Stellen perforiert ausgebildet sein. Aus der DE-PS 842 363 sind insbesondere Klemmenkästen bekannt, in denen spezielle Trennnähte ausgebildet sind, welche bereits mit eingegossen oder nachträglich aus dem Klemmenkastenmaterial ausgebrannt werden.

Aus der DE 29 37 074 C2 ist ein weiterer explosionsgeschützter Klemmenkasten bekannt, bei dem eine Klemmenkastengehäuseöffnung in der Gehäusewandung mit einem Blech verschlossen ist. Die Entlastungsöffnung ist mit einer, der jeweiligen gewählten geometrischen Form der Gehäuseöffnung, angepassten Druckentlastungsklappe abgedeckt. Diese ist mittels eines schmalen Steges mit der Klemmenkastengehäusewandung dauerhaft mechanisch fest verbunden.

Die DE 20 2013 101 980 U1 beschreibt eine Schrankanordnung mit einem Schrank, der elektrische Geräte enthält und mit einem kontrollierbaren Druckentlastungsmittel zum kontrollierten Ablassen von Überdruck aus dem Schrank ausgebildet ist. Am Schrank ist ein Anschlusskasten angeordnet, welcher Speisekabel enthält. Entsteht im Anschlusskasten ein Überdruck wird dieser in den Schrank abgelassen, wobei die Druckentlastungsöffnung, welche mit einer Zwischenklappe verschlossen ist geöffnet wird. Die Zwischenklappe besteht aus einem leicht zerbrechlichen Material. Damit entspannt sich der Überdruck in den Schrank. Am Schrank ist oben noch eine Überdruckklappe angeordnet, welche sich bei einem Überdruck im Schrank nach oben öffnet indem diese ebenfalls zerbricht oder nach oben aufgeklappt wird. Das abgedichtete Gehäuse und die Schrankanordnung mit den Durchgangsöffnungen sind in dieser Art nur bedingt für elektrische Hochspannungsmaschinen geeignet.

Die technischen Lösung in der DE 10 2007 011 386 B3, die beschreibt einen Schaltschrank für eine wandhängende Mittelspannungsanlage bei der der Explosionsgasstrom an bzw. in einer doppelwandigen Rückwand um 90° oder 180° umgelenkt werden soll. Der Explosionsgasstrom tritt dabei nach Passieren eines möglicherweise eingebauten Metallgitterfilters in den unmittelbar benachbarten Raum des Schaltschrankes aus. Damit können Personen, die sich in unmittelbarer Nähe des Schaltschrankes im Raum befinden, gefährdet werden. Diese Konstruktion ist für Hochspannungsmaschinen nur bedingt geeignet Ferner offenbart JPS55134761U eine Hochspannungsmaschine mit einem Klemmenkasten und die DE4312621 A1 eine Schaltanlage mit einem Ausdehnungsgefäß.

Der Erfindung liegt die Aufgabe zu Grunde eine Hochspannungsmaschine mit einem daran oder darin angeordneten Klemmenkasten mit erhöhter Kurzschlussfestigkeit zu schaffen, welcher die Gefahr durch ab- oder weggesprengte Teile vermeidet, konstruktiv einfach aufgebaut ist, sich nachträglich ohne großen Aufwand an bereits in Betrieb befindliche elektrische Maschinen anbauen lässt und eine erhöhte Umgebungssicherheit bietet.

Die Aufgabe wird erfindungsgemäß mit den Merkmalen des Oberbegriffs und des kennzeichnenden Teils des ersten Patentanspruches gelöst. Weitere vorteilhafte Ausgestaltungen sind in den abhängigen rückbezüglichen Unteransprüchen beschrieben. Der Klemmenkasten mit erhöhter Kurzschlussfestigkeit ist wie allgemein bekannt, direkt in die, oder über ein Zwischenstück an die Maschinengehäuseoberfläche 2 angebaut. Dabei sind am Klemmenkasten 1 auf dem Klemmenkastengehäuse 3 ein oder mehrere zusätzliche offene oder sich selbsttätig öffnende Klemmenkastenschächte 4 angeordnet. Dieser Klemmenkastenschacht 4 bzw. die Klemmenkastenschächte 4 können dabei in verschiedenen Richtungen, vorzugsweise nach oben, seitlich oder auch nach unten gerichtet sein. Diese sind bedeutend länger als bislang üblich ausgeführt.

Dies führt dazu, dass im Klemmenkasten 1 die Kurzschlussfestigkeit und die Lichtbogensicherheit erhöht werden kann. Einerseits verbessert sich die gesamte Umgebungssicherheit am Standort und im Bedienbereich der betreffenden Hochspannungsmaschine, andererseits wird die Unfallgefahr für das Bedienpersonal erheblich verringert. Ein weiterer wesentlicher und insbesondere wirtschaftlicher Vorteil ist die Reduzierung von Schäden an der Hochspannungsmaschine. Auch bleiben im Schadensfall alle Erdverbindungen der Hochspannungsmaschine einschließlich Klemmenkasten 1 elektrisch wirksam.

In einer insgesamt bevorzugten Variante ist statt mehrerer nur ein Klemmenkastenschacht 4 oben auf den Klemmenkasten 1 mit erhöhter Kurzschlussfestigkeit für elektrische Hochspannungsmaschinen aufgesetzt angeordnet und senkrecht nach oben gerichtet. Dieser Klemmenkastenschacht 4 erstreckt sich dabei mindestens bis in eine Höhe von 2200 mm, bemessen ab der durch Personal begehbaren Fläche 5. Er kann aber auch noch höher ausgebildet sein.

Es ist auch möglich, dass direkt am Klemmenkasten 1 mit erhöhter Kurzschlussfestigkeit an einer Klemmenkastenseitenwand 6 ein Klemmenkastenwinkelstück 7 und auf diesem dann der Klemmenkastenschacht 4 angeordnet ist. Dies ist bei engen Platzverhältnissen in bestimmten Einsatzfällen räumlich von Vorteil, z. B. wenn der Explosionsgasstrom in eine bestimmte Richtung gelenkt werden soll, ohne Schaden anrichten zu können.

Zusätzlich kann aus Gründen erhöhter Sicherheit eine um den Klemmenkasten 1 mit erhöhter Kurzschlussfestigkeit für elektrische Hochspannungsmaschinen gesonderte Klemmenkastenumhausung 8 aus Stahlblech oder anderen nichtbrennbaren, wärmebeständigen Material angeordnet sein.

Um die im Klemmenkasten 1 auftretende Explosionsenergie infolge eines Kurzschlusses, bei dem ein Lichtbogen entsteht, an der Austrittsöffnung des Klemmenkastenschachtes 4 abzubremsen oder in eine bestimmte Richtung zu lenken, ist innerhalb des Klemmenkastenschachtes 4 ein Abluftlabyrinth 9 angeordnet.

Bevorzugt sind im Klemmenkastenschacht 4 innen oder auf dem Klemmenkastenschacht 4 oben an geeigneten Stellen als Abluftlabyrinth 9 mehrere Prallplatten angeordnet. Des Weiteren kann auf dem Klemmenkastenschacht 4 zusätzlich ein in eine bestimmte Richtung gerichtetes Klemmenkastenumlenkstück 10 angeordnet sein, um das mit hoher Geschwindigkeit ausströmende Explosionsgasgemisch in eine gewünschte Richtung zu lenken. In diesem freien Raum kann das Gemisch abkühlen und sich entspannen sowie keinen Schaden im begehbaren Bereich der elektrischen Maschine anrichten.

Es ist für bestimmte Einsatzorte von entsprechenden elektrischen Hochspannungsmaschinen auch möglich, im Klemmenkastenschacht 4 als Mittel zur Dämpfung der Explosionsenergie einen oder mehrere Materialeinsätze 14 anzuordnen. Das können zum Beispiel ein Metallnetzeinsatz, ein Metallwolleeinsatz oder ein Mineralwolleeinsatz oder eine Kombination von diesen an entsprechender Stelle sein. Bevorzugt erfolgt diese Anordnung erst unmittelbar vor der Austrittsöffnung des Klemmenkastenschachtes 4. Generell ist es auch möglich, diese Materialeinsätze 14 an anderer Stelle einfach oder mehrfach oder auch untereinander kombiniert im Klemmenkastenschacht 4 15 anzuordnen.

Gleichfalls ist es beim neuartigen Klemmenkasten 1 mit erhöhter Kurzschlussfestigkeit von Vorteil, wenn im Klemmenkastenschacht 4 selbstverlöschende Materialien zur Erstickung von brennenden Gasen angeordnet sind. Auch können löschende Materialien geeignet für elektrische Anlagen z. B. Pulver oder Sand so positioniert sein, dass diese Materialien explosionsartig in den Klemmenkasten gebracht werden und so ein Verlöschen des Lichtbogens erzwingen.

Am Austritt des Klemmenkastenschachtes 4 selbst ist der Klemmenkastenaufsatzbalges 15 angeordnet. Uber diesen Klemmenkastenaufsatzbalg 15 kann der Klemmenkasten 1 an Abzugsschächte oder andere Wandanschlüsse gekoppelt sein. Der Klemmenkastenaufsatzbalg 15 ist im Normalfall zusammengefaltet und wird bei Auftreten eines Kurzschlusses im Klemmenkasten 1 erst durch das ausströmende Explosionsgasgemisch auseinandergefaltet, verlängert die Wegstrecke und dämpft die Explosionsenergie. Er sollte dabei so groß bemessen sein, dass er ein ausreichendes Volumen besitzt und der explosionsbedingte Gasausstoss sich in diesem weitgehend entspannen kann.

Zur weiteren Reduzierung der Austrittsgeschwindigkeit des Explosionsgasgemisches können am oder im Klemmenkastenschacht 4 auch weitere technische Mittel, wie klappbare Bürsten oder klappbare gedämpfte Rechen angeordnet sein, welche die Energie im Inneren oder am Ende des Klemmenkastenschachtes 4 gestuft abbauen.

Im Prinzip kann der Klemmenkasten 1 mit erhöhter Kurzschlussfestigkeit für elektrische Hochspannungsmaschinen auch so ausgebildet sein, dass der Klemmenkastenschacht 4 nach außen ins Freie durch eine Wand, oder durch das Dach, oder in einen gesondert angeordneten Raum oder nach unten in einen Kellerschacht bzw. Kellerraum geführt ist. In diesem Fall wird die Explosion ganz aus dem Raum, in dem die elektrische Maschine steht, ferngehalten.

Die Erfindung soll nachstehend in einem Ausführungsbeispiel an Hand der drei Figuren näher erläutert werden. Das nachstehend beschriebene Ausführungsbeispiel bezieht sich auf eine Hochspannungsmaschine größer 1kV mit einem daran oder darin angeordneten Klemmenkasten 1.
- Fig. 1: zeigt eine Schrägansicht auf einen neuartigen Klemmenkasten 1 mit nach oben angeordneten Klemmenkastenschacht 4
- Fig. 2: zeigt eine Schrägansicht auf einen neuartigen, um 90° gedrehten, Klemmenkasten 1 mit einem Klemmenkastenwinkelstück 7 und nach oben angeordnetem Klemmenkastenschacht 4 mit aufgesetzten Klemenkastenaufsatzbalg 15
- Fig. 3: zeigt eine Schrägansicht auf einen neuartigen Klemmenkasten mit beidseitig angeordneten Schacht

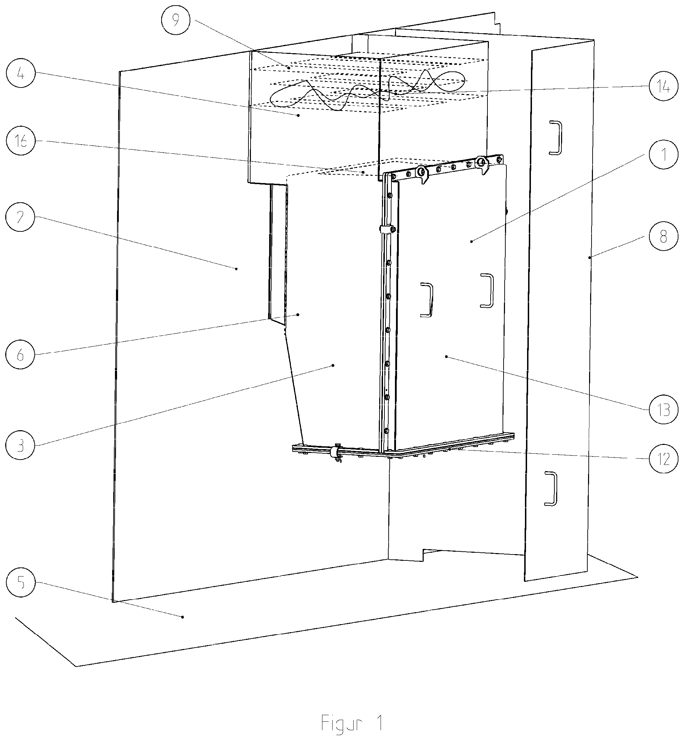

In Figur 1 ist eine Schrägansicht abgebildet, wo gezeigt ist, dass der Klemmenkasten 1 seitlich außen auf einer Maschinengehäuseoberfläche 2 angeordnet ist. Das Klemmenkastengehäuse 3 ist nach unten mit einem Klemmenkastenboden 12 und nach vorn mit einem Klemmenkastendeckel 13 verschlossen. Direkt oben auf dem Klemmenkasten 1 ist eine Druckentlastungsmembran 11 eingebaut, die den Klemmenkasten zunächst verschließt. Im Falle der Zündung eines Lichtbogens bedingt durch Kurzschluss im Klemmenkasten 1 öffnet die Druckentlastungsmembran 11, damit das Explosionsgasgemisch sich nach oben in den Klemmenkastenschacht 4 entspannen kann.

Diese Druckentlastungsmembran 11 kann aber auch weiter oben an anderer Stelle angeordnet werden. Damit vergrößert sich das Volumen, in dem das Explosionsgasgemisch entspannen kann, bevor es nach außen gelangt. Je größer das zur Verfügung stehende Volumen, umso geringer ist die Expansionsgeschwindigkeit des austretenden Eplosionsgasgemisches. Oben auf dem Klemmenkasten 1 ist das Klemmenkastengehäuse 3 als ein Klemmenkastenschacht 4 ausgebildet, der sich hier senkrecht nach oben bis an die Oberkante des Maschinengehäuses erstrecken kann. Die begehbare Fläche 5 im Bereich des Klemmenkastens 1 kann eingeschränkt sein, wenn aus Sicherheitsgründen um den Klemmenkasten 1 zusätzlich eine Klemmenkastenumhausung 8 angeordnet ist. Hier ist ein Teil einer Klemmenkastenumhausung 8 gezeigt. Die Klemmenkastenumhausung 8 kann auch kleiner bzw. enger anliegend ausgeführt sein. Die Klemmenkastenseitenwand 6 ist in diesem Ausführungsbeispiel einteilig ausgeführt. Bei größeren elektrischen Maschinen kann die Klemmenkastenseitenwand 6 aber auch aus mehreren Teilen bestehen. In Figur 1 ist im oberen Teil des Klemmenkastenschachtes 4 ein Abluftlabyrinth 9 angeordnet, welches das Eplosionsgasgemisch mehrfach umlenkt und dieses abbremst. Dabei unterstützend ist im Abluftlabyrinth 9 auch ein Materialeinsatz 14 integriert, der die Geschwindigkeit des Eplosionsgasgemisches ebenfalls verringert.

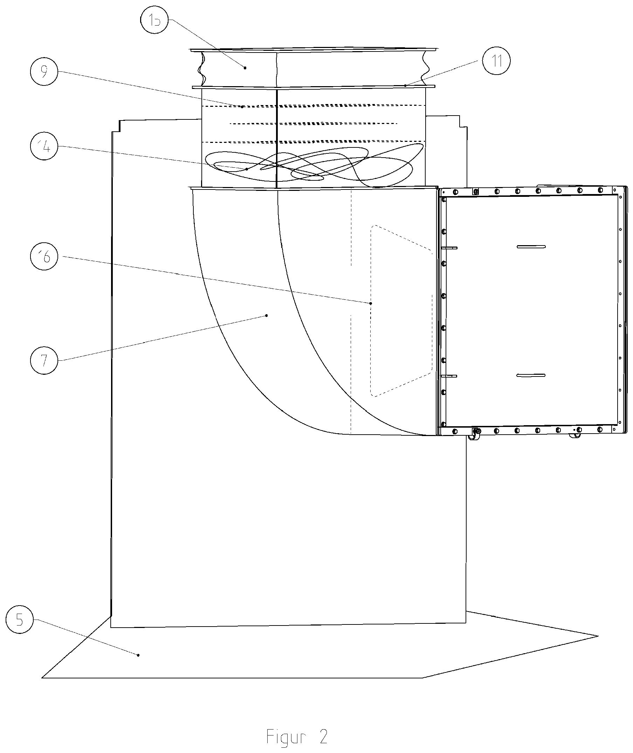

In Figur 2 ist eine Schrägansicht auf einen neuartigen, um 90° gedrehten, Klemmenkasten 1 mit einem seitlich daran angeordneten Klemmenkastenwinkelstück 7 und sich daran anschließenden nach oben ausgebildeten Klemmenkastenschacht 4 abgebildet. Im Inneren des Klemmenkastenschachtes 4 sind hier oben ein Abluftlabyrinth 9 und darunter ein Materialeinsatz 14 angeordnet. Oberhalb des Klemmenkastenschachtes 4 ist noch ein Klemmenkastenaufsatzbalg 15 angeordnet. Dieser kann auch wahlweise durch geeignete Materialien, welche erst ab einen bestimmten Druck aufreisen und die Öffnung nach außen freigeben, verschlossen sein.

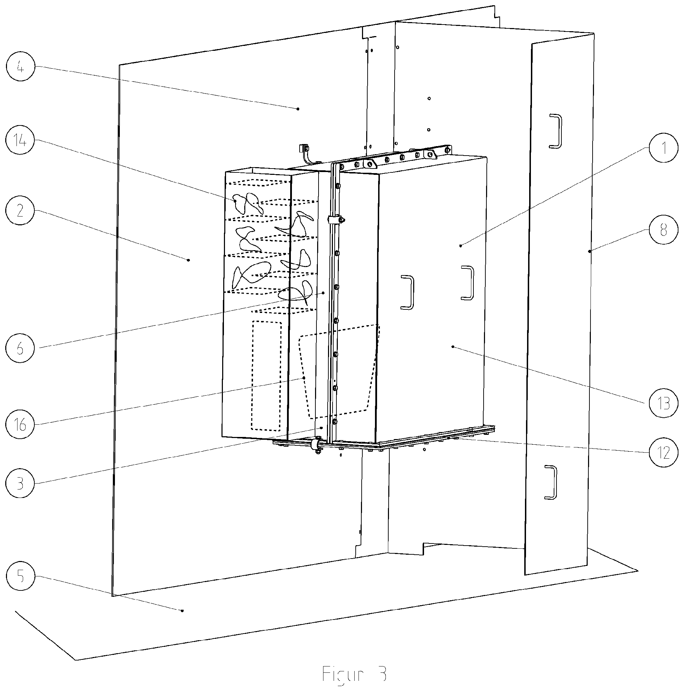

Aus der Schrägansicht gemäß Figur 3 ist eine Anordnung ersichtlich, bei der am neuartigen Klemmenkasten 1, welcher direkt auf einer Seitenwand des Maschinengehäuses 2 befestigt ist, beidseitig seitlich am Klemmenkastengehäuse 3 an den Klemmenkastenseitenwänden 6 je ein Klemmenkastenschacht 4 angeordnet ist.

Der Klemmenkasten 1 ist mit einem Klemmenkastendeckel 13 und mit einem Klemmenkastenboden 12 verschlossen. Die Klemmenkastenseitenwände 6 sind durchbrochen. Die Öffnungen münden in die nach oben gerichteten Klemmenkastenschächte 4. Diese Klemmenkastenschächte 4 können im Querschnitt jeweils auch kleiner ausgeführt werden. Zusätzlich können im Inneren noch Leitbleche (in der Zeichnung nicht dargestellt) zur Führung und Umlenkung des Explosionsgasgemisches angeordnet sein. Im Klemmenkastenschacht 4 ist jeweils ein Abluftlabyrinth 9 angeordnet, der das Explosionsgasgemisch nach oben soweit reduziert, dass kein Schaden im Raum oberhalb der begehbaren Fläche 5 entstehen kann. Im Prinzip können auch drei Klemmenkastenschächte 4 angeordnet werden, welche auch unterschiedlich dimensioniert sein können. Dadurch kann das Explosionsgasgemisch, welches bei Zündung eines Lichtbogens bei einem Kurzschluss entsteht, zielgerichtet abgeleitet werden. Die Dimensionierung sollte so erfolgen, dass dabei bereits innerhalb der Klemmenkastenschächte eine weitgehende Entspannung des Explosionsgasstromes erfolgt.

### Bezugszeichenliste

- 1: Klemmenkasten
- 2: Maschinengehäuseoberfläche
- 3: Klemmenkastengehäuse
- 4: Klemmenkastenschacht
- 5: begehbare Fläche
- 6: Klemmenkastenseitenwand
- 7: Klemmenkastenwinkelstück
- 8: Klemmenkastenumhausung
- 9: Abluftlabyrinth Klemmenkastenumlenkstück
- 11: Druckentlastungsmembran
- 12: Klemmenkastenboden
- 13: Klemmenkastendeckel
- 14: Materialeinsatz
- 15: Klemmenkastenaufsatzbalg

## Patentansprüche

1. Hochspannungsmaschine mit einem daran oder darin angeordneten Klemmenkasten mit erhöhter Kurzschlussfestigkeit zum Anbau in die oder an die Maschinengehäuseoberfläche (2), wobei am Klemmenkasten (1) ein oder mehrere offene oder sich selbsttätig öffnende Klemmenkastenschächte (4) angeordnet sind, **dadurch gekennzeichnet dass** am Austritt des Klemmenkastenschachtes (4) ein Klemmenkastenaufsatzbalg (15) angeordnet ist.

2. Hochspannungsmaschine nach Anspruch 1,
**dadurch gekennzeichnet,**
**dass** der oder die Klemmenkastenschächte (4) nach oben gerichtet sind und mindestens, ausgehend von einer begehbaren Fläche (5), 2200mm hoch ausgeführt sind, dass eine Gefährdung von Personen ausgeschlossen ist.

3. Hochspannungsmaschine nach Anspruch 1,
**dadurch gekennzeichnet,**
**dass** an einer Klemmenkastenseitenwand (6) ein Klemmenkastenwinkelstück (7) und auf diesem der Klemmenkastenschacht (4) angeordnet ist.

4. Hochspannungsmaschine nach Anspruch 1,
**dadurch gekennzeichnet,**
**dass** um den Klemmenkasten (1) eine zusätzliche Klemmenkastenumhausung (8) aus Stahlblech oder anderen nichtbrennbaren, wärmebeständigen Material angeordnet ist.

5. Hochspannungsmaschine nach Anspruch 1,
**dadurch gekennzeichnet,**
**dass** innerhalb des Klemmenkastenschachtes (4) (15) als ein Abluftlabyrinth (9) mehrere Prallplatten angeordnet sind.

6. Hochspannungsmaschine nach Anspruch 1,
**dadurch gekennzeichnet,**
**dass** oben auf dem Klemmenkastenschacht (4) ein in eine bestimmte Richtung weisendes Klemmenkastenumlenkstück angeordnet ist.

7. Hochspannungsmaschine nach Anspruch 1,
**dadurch gekennzeichnet,**
**dass** innerhalb des Klemmenkastenschachtes (4) als Mittel zur Bindung der Explosionsenergie ein Materialeinsatz (14), wie ein Metallnetzeinsatz, ein Metallwolleeinsatz oder ein Mineralwolleeinsatz angeordnet ist.

8. Hochspannungsmaschine nach Anspruch 1,
**dadurch gekennzeichnet,**
**dass** innerhalb des Klemmenkastenschachtes (4) selbstverlöschende Materialien zur Erstickung von brennenden Gasen oder Lichtbogen löschende Materialien angeordnet sind.

9. Hochspannungsmaschine nach Anspruch 1,
**dadurch gekennzeichnet,**
**dass** am oder im Klemmenkastenschacht (4) Mittel zur Reduzierung der Explosionsenergie, wie klappbare Bürsten oder klappbare Rechen angeordnet sind.

10. Hochspannungsmaschine nach Anspruch 1,
**dadurch gekennzeichnet,**
**dass** der Klemmenkastenschacht (4) nach außen ins Freie durch eine Wand, oder durch das Dach, oder in einen gesondert angeordneten Raum oder nach unten in einen Kellerschacht oder Kellerraum geführt ist.

## Claims

1. High-voltage machine including a terminal box arranged thereon or therein and having increased short-circuit withstand capacity for installation in or on the machine housing surface (2), wherein one or more open or automatically opening terminal box shafts (4) are disposed on the terminal box (1),
**characterized in that**
a top-mounted terminal box bellows (15) is disposed at the exit of the terminal box shaft (4).

2. High-voltage machine according to claim 1,
**characterized in that**
the terminal box shaft(s) (4) is/are directed upwards and is/are at least 2200 mm high starting from a walk-on area (5) such that any hazard to persons is excluded.

3. High-voltage machine according to claim 1,
**characterized in that**
at one terminal box side wall (6), a terminal box angular piece (7) is disposed and the terminal box shaft (4) is disposed thereon.

4. High-voltage machine according to claim 1,
**characterized in that**
an additional terminal box enclosure (8) made of sheet steel or any other non-flammable, heat-resistant material is disposed around the terminal box (1).

5. High-voltage machine according to claim 1,
**characterized in that**
several baffle plates are disposed within the terminal box shaft (4) to form a waste air labyrinth (9).

6. High-voltage machine according to claim 1,
**characterized in that**
a terminal box deflector piece pointing in a defined direction is disposed at the top of the terminal box shaft (4).

7. High-voltage machine according to claim 1,
**characterized in that**
a material insert (14), such as a metal mesh insert, a metal wool insert or a mineral wool insert, is disposed within the terminal box shaft (4) as a means to bind explosion energy.

8. High-voltage machine according to claim 1,
**characterized in that**
self-extinguishing materials to suffocate burning gases or materials to extinguish electric arcs are disposed within the terminal box shaft (4).

9. High-voltage machine according to claim 1,
**characterized in that**
means to reduce explosion energy, such as folding brushes or folding racks, are disposed at or in the terminal box shaft (4).

10. High-voltage machine according to claim 1,
**characterized in that**
the terminal box shaft (4) is guided outwards in the open through a wall or through the roof, or into a separate room or downwards into a basement shaft or basement room.

## Revendications

1. Machine à haute tension comportant une boîte à bornes disposée à ou à l'intérieur de celle-ci et présentant une tenue élevée aux courts-circuits, destinée au montage dans ou sur la surface du boîtier de machine (2), dans laquelle un ou plusieurs puits (4) de la boîte à bornes ouverts ou s'ouvrant automatiquement sont disposés sur la boîte à bornes (1),
**caractérisée**
**en ce qu'**un soufflet rapporté (15) sur la boîte à bornes est disposé à la sortie du puits (4) de la boîte à bornes.

2. Machine à haute tension selon la revendication 1,
**caractérisée**
**en ce que** le ou les puits (4) de la boîte à bornes sont dirigés vers le haut et réalisés sur une hauteur d'au moins 2200 mm à partir d'une aire accessible (5) de manière à exclure tout risque pour les personnes.

3. Machine à haute tension selon la revendication 1,
**caractérisée**
**en ce que** sur une paroi latérale (6) de la boîte à bornes est disposée une pièce angulaire (7) de la boîte à bornes et sur celle-ci est disposé le puits (4) de la boîte à bornes.

4. Machine à haute tension selon la revendication 1,
**caractérisée**
**en ce qu'**une enceinte (8) additionnelle de la boîte à bornes en tôle d'acier ou en un matériau non combustible et résistant à la chaleur est disposée autour de la boîte à bornes (1).

5. Machine à haute tension selon la revendication 1,
**caractérisée**
**en ce que** plusieurs plaques de chicane sont disposées de manière à former un labyrinthe (9) d'air évacué à l'intérieur du puits (4) de la boîte à bornes.

6. Machine à haute tension selon la revendication 1,
**caractérisée**
**en ce qu'**une pièce de renvoi de la boîte à bornes orientée dans une certaine direction est disposée en haut du puits (4) de la boîte à bornes.

7. Machine à haute tension selon la revendication 1,
**caractérisée**
**en ce qu'**un insert matériel (14), comme un insert de filet métallique, un insert de laine métallique ou un insert de laine minérale, est disposé à l'intérieur du puits (4) de la boîte à bornes en tant que matériau destiné à l'absorption de l'énergie de l'explosion.

8. Machine à haute tension selon la revendication 1,
**caractérisée**
**en ce que** des matériaux auto-extinguibles pour l'étouffement de gaz en combustion ou des matériaux éteignant des arcs électriques sont disposés à l'intérieur du puits (4) de la boîte à bornes.

9. Machine à haute tension selon la revendication 1,
**caractérisée**
**en ce que** des moyens visant à réduire l'énergie de l'explosion, comme des brosses pliantes ou des râteaux pliants, sont disposés sur ou dans le puits (4) de la boîte à bornes.

10. Machine à haute tension selon la revendication 1,
**caractérisée**
**en ce que** le puits (4) de la boîte à bornes est guidé vers l'extérieur à l'air libre à travers un mur ou le toit, ou bien vers une pièce séparée ou encore vers le bas dans un puits en sous-sol ou dans une pièce du sous-sol.
